Europäisches Patentamt

European Patent Office

Office européen des brevets

(19)

(11) Veröffentlichungsnummer: **0 265 820 B1**

(12) EUROPÄISCHE PATENTSCHRIFT

(45) Veröffentlichungstag der Patentschrift:
06.02.91 Patentblatt 91/06

(51) Int. Cl.⁵ : **C09C 1/22**, C09C 1/40,
C09C 1/24, C09C 1/00,
C01G 49/00

(21) Anmeldenummer: 87115379.7

(22) Anmeldetag: 21.10.87

(54) Plättchenförmige Pigmente der allgemeinen Formel MnX-AlY-Fe2-(X+Y)03.

(30) Priorität: 24.10.86 DE 3636156

(43) Veröffentlichungstag der Anmeldung:
04.05.88 Patentblatt 88/18

(45) Bekanntmachung des Hinweises auf die
Patenterteilung:
06.02.91 Patentblatt 91/06

(84) Benannte Vertragsstaaten:
BE DE FR GB IT NL

(56) Entgegenhaltungen:
EP-A- 0 004 643

(56) Entgegenhaltungen:
DE-A- 3 324 400
US-A- 4 373 963
CHEMICAL ABSTRACTS, Band 97, Nr. 12, 20.
September 1982, Seite 152,
Zusammenfassung Nr. 94822x, Columbus,
Ohio, US; & JP-A-82 49 667 (TITAN KOGYO
K.K.) 23-03-1982

(73) Patentinhaber: BASF Aktiengesellschaft
Carl-Bosch-Strasse 38
D-6700 Ludwigshafen (DE)

(72) Erfinder: Ostertag, Werner, Dr.
Oberer-Bergel-Weg 2
D-6718 Gruenstadt (DE)

## Beschreibung

Die vorliegende Erfindung betrifft plättchenförmige Pigmente vom Typ $Mn_xAl_yFe_{2-(x+y)}O_3$, die der Gruppe der Effekt- oder Glanzpigmente zuzuordnen sind.

Die optische Wirkung der Effekt- oder Glanzpigmente beruht auf gerichteter Reflexion an flächig ausgebildeten und ausgerichteten stark lichtbrechenden Pigmentpartikeln. Die Farbigkeit der Pigmente spielt eine untergeordnete Rolle. Der mittlere Partikeldurchmesser der Effekt- bzw. Glanzpigmente ist weit größer als derjenige von Pigmenten, deren Wirkung auf Streuung und Absorption beruht. Er bestimmt die Art des Effektes, der für Plättchen mit kleinerem Durchmesser "seidig weich" erscheint, für Plättchen mit größerem Durchmesser in charakteristischer Weise glitzert.

Effektpigmente können metallischer oder oxidischer Natur sein. Altbekannt sind plättchenförmige Aluminiumpigmente. Effektpigmente auf oxidischer Basis finden neuerdings zunehmendes Interesse, beispielsweise für Automobillackierungen, wo sie eine optisch attraktive Alternative zu den seit langem bekannten Aluminiumpigmenten darstellen. Auch für Kunststoffeinfärbungen, beim Druck oder in der Kosmetik, d. h. in allen Bereichen, in denen hoher Glanz erwünscht ist, finden oxidische Effektpigmente Verwendung. Solche oxidischen Effektpigmente sind beispielsweise auf hydrothermalem Wege hergestellte plättchenförmige Eisenoxid- bzw. Eisenoxidmischphasen-Pigmente, bei denen die Pigmentpartikel Einkristallcharakter haben.

Die Entwicklung der üblicherweise hydrothermal hergestellten plättchenförmigen Eisenoxid- bzw. Eisenoxidmischphasen für Effektpigmentanwendungen kann man anhand zahlreicher Patente verfolgen : Die Patente FR-A Nr. 63 8200, DE-C Nr. 541 768, 658 020, DE-A Nr. 20 56 042, GB-A Nr. 20 28 784 und DE-A Nr. 30 19 404 beschreiben die Herstellung von plättchenförmigen $\alpha$-$Fe_2O_3$ Pigmenten durch Hydrothermalbehandlung von Eisenhydroxid bzw. Eisenoxidhydrat, wobei Plättchenpigmente je nach den Bedingungen in unterschiedlicher Partikelgeometrie und -größe, in Farbtönen von gelbrot bis violett, anfallen.

Die Nachteile solcher reinen Haematitpigmente liegen im ungenügend hohen Durchmesser zu Dickenverhältnis der Produkte und in langwierigen Produktionsverfahren für Haematitpigmente mit größerem, mittleren Partikeldurchmesser. Die besonders in DE-A 20 56 042 herausgestellte Möglichkeit über sehr hohe Alkalikonzentrationen größerer Plättchen zu erzeugen, ist aus Korrosionsgründen für die Praxis ohne Bedeutung.

In der EP-A Nr. 0014 382 sind plättchenförmige Eisenoxid-Pigmente und deren Herstellung über Hydrothermalverfahren beschrieben, die 0,1-12 Gew.% mindestens einer der Oxide der Elemente der IV., V. und/oder VI. Haupt- und Nebengruppe und/oder der II. Nebengruppen des Periodensystems der Elemente enthalten. Eine zentrale Bedeutung kommt hierbei dem Siliciumdioxid zu, das wie die übrigen oben genannten Elemente es ermöglichen soll, das Schichtdickenwachstum und das Wachstum der Plättchen separat zu steuern. Das Wachstum des Plättchendurchmessers wird vor allem durch den pH-Wert der Suspension bestimmt, während die Schichtdicke von den genannten Oxiden beeinflußt wird. Trotz eines verbesserten Durchmesser- zu Dickenverhältnisses der so hergestellten Pigmente können aber nur relativ kleine mittlere Durchmesser der plättchenförmigen Produkte erhalten werden.

In der EP 068 311 und der US 4 373 963 werden plättchenförmige Mischphasen-Pigmente der Zusammensetzung $Al_xFe_{2-x}O_3$ beschrieben. Auch diese Pigmente werden in einer hydrothermalen Reaktion aus einer wässrigen Suspension von EisenIII-hydroxid, bzw. -Oxidhydrat, Natriumaluminat und Natronlauge hergestellt. Die Pigmente zeichnen sich gegenüber den bisher beschriebenen plättchenförmigen Haematitpigmenten durch ihren aufgehellten, Überfärbungen ermöglichenden Farbton und durch vergleichsweise größere Durchmesser und höhere Durchmesser- zu Dickeverhältnisse der Einzelpartikel aus. Außerdem ist der mittlere Teilchendurchmesser dieser Pigmente auf maximal etwa 12 µm begrenzt, wenn man nicht bei der hydrothermalen Behandlung extrem lange Verweilzeiten bei sehr hohen Alkaligehalten in Kauf nehmen will. Ersteres ist aus produktionstechnischer Sicht wegen geringer Raum-Zeit-Ausbeuten, letzteres aus werkstofftechnischer Sicht problematisch.

EP 0180 881 beschreibt ein Verfahren zur Herstellung von plättchenförmigem $\alpha$-$Fe_2O_3$ Pigment mit einem mittleren Partikeldurchmesser von bis zu 20 µ und einen mittleren Durchmesser- zu Dickenverhältnis von 20-100, dessen besonderes Merkmal der Zusatz von aktiven besonders hergestellten $\alpha$-Eisenoxidkeimen plättchenförmiger Gestalt zur EisenIIIhydroxidhaltigen Ausgangssuspension vor der hydrothermalen Behandlung ist. Nachteilig bei diesem Verfahren ist der besondere, der Hydrothermalreaktion vorgeschaltete Verfahrensschritt der Herstellung aktiver $\alpha$-Eisenoxidkeime, der technisch anspruchsvoll ist und das Gesamtverfahren erheblich kompliziert.

In der JA-A 80 16 978 werden plättchenförmige $\alpha$-Eisenoxide, die ihrerseits aus einer hydrothermalen Reaktion stammen, als Keime für die Herstellung von gröberem plättchenförmigem Pigment eingesetzt. Diese Arbeitsweise führt jedoch zur Bildung zahlloser unerwünschter Agglomerate, so daß derartig herge-

2

stellte Pigmente für anspruchsvolle Anwendungen nicht in Frage kommen.

In der DE-OS 33 24 400 werden Braunpigmente auf der Basis von Eisen-Aluminium-Mischoxiden beschrieben, die mindestens eines der Elemente Chrom, Mangan, Nickel, Kobalt oder Kupfer enthalten. Diese nichtplättchenförmigen Pigmente werden durch ein Fällungsverfahren gewonnen.

Der vorliegenden Erfindung lag daher die Aufgabe zugrunde, plättchenförmige Pigmente auf Basis von Eisenoxiden oder eisenoxidhaltiger Mischphasenoxide zur Verfügung zu stellen, die die Nachteile der bekannten Pigmente nicht haben und die auf einfache Weise in kurzen Verweilzeiten in einem einstufigen Verfahren hergestellt werden können und deren mittlerer Teilchendurchmesser gezielt einstellbar ist.

Diese Aufgabe wird gelöst durch plättchenförmige Pigmente auf Basis von Eisenoxid der allgemeinen Formel $Mn_XAl_YFe_{2-(X+Y)}$, in der X einen Wert von 0,01 bis 0,06 und Y einen Wert von 0 bis 0,2 hat.

Die erfindungsgemäßen Pigmente lassen sich auf einfache Weise in einem hydrothermalen Verfahren herstellen, indem man eine wäßrige Suspension von Eisen(III)-hydroxid bzw. -oxidhydrat in Gegenwart von Alkalihydroxiden oder -carbonaten und in Gegenwart von im Reaktionsmedium löslichen Manganverbindungen einer Behandlung bei Temperaturen oberhalb von 120°C unterwirft. Überraschenderweise wird hierbei Mangan in das sich bildende plättchenförmige ternäre Oxidmischphasenpigment der allgemeinen Formel $Mn_XAl_YFe_{2-(X+Y)}O_3$ eingebaut.

Als im Reaktionsmedium lösliche Manganverbindungen kommen die Verbindungen des sechswertigen und insbesondere des siebenwertigen Mangans, z.B. Kaliumparamanganat in Betracht.

Als Eisenhydroxid bzw. -oxidhydrat kommt neben dem gelartigen $Fe(OH)_3$ auch das $\alpha$-FeOOH und $\gamma$-FeOOH in Frage. Die Konzentration bzw. der Feststoffgehalt der Suspension wird zweckmäßig so gewählt, daß die Suspensionen sich ohne Schwierigkeiten technisch handhaben lassen ; im allgemeinen enthalten die Suspensionen, bezogen auf Wasser 1 bis 20, vorzugsweise 1 bis 10 Gew.% Eisenhydroxid bzw. -oxidhydrate.

Die Mengen der im Reaktionsmedium löslichen Manganverbindungen werden so gewählt, daß das Atomverhältnis Mn :Fe mindestens dem Atomverhältnis des herzustellenden Pigmentes entspricht. Grundsätzlich ist festzustellen, daß mit steigender Mangankonzentration in der Suspension - sonst gleiche Reaktionsbedingungen vorausgesetzt - nicht nur der Mangangehalt im fertigen Pigment steigt, sondern auch der mittlere Teilchendurchmesser der Pigmente bei etwa gleich bleibenden Durchmesser-Dicken-Verhältnis steigt. Man hat es so in der Hand durch Wahl der Konzentration der Manganverbindung in der Suspension gezielt Pigmente mit einem jeweils gewünschten Teilchendurchmesser herzustellen, der zwischen 6 und 65 μm variiert werden kann.

Ein wesentlicher Vorteil ist, daß bei der Herstellung der erfindungsgemäßen Pigmente nicht in stark alkalischem Reaktionsmedium gearbeitet werden muß. Es genügt daher, daß die Normalität der Suspensionen am Alkalihydroxid und/oder Alkalicarbonat nicht höher als 2 N sein muß, um die Pigmente in vertretbaren Reaktionszeiten zu erhalten.

Die Temperatur bei der hydrothermalen Umsetzung soll vorteilhaft über 170°C liegen, besonders vorteilhaft wählt man Temperaturen von 250 bis 360°C.

Für den Fall, daß die erfindungsgemäßen Pigmente auch Aluminium enthalten sollen, setzt man Suspensionen ein, die Alkalialuminate enthalten. Selbstverständlich muß dieses nicht als solches eingesetzt werden, sondern es können auch Aluminiumoxid, das unter den hydrothermalen Bedingungen in Alkalialuminat übergeführt wird, sowie Aluminiumoxidhydrate eingesetzt werden. Das Al : Fe-Atomverhältnis, in den einzusetzenden Reaktanden muß' wie beim Mn/Fe-Verhältnis mindestens ebenfalls dem Al/Fe-Atomverhältnis des herzustellenden Pigmentes entsprechen. Zweckmäßigerweise wählt man einen Überschuß an Al, wobei das überschüssige Al nach erfolgter Reaktion in Lösung bleibt.

Enthält die Ausgangssuspension kein Aluminium, so genügen geringere Mangan-Zusätze um entsprechend große Plättchen zu erzeugen. Die Plättchendicke wächst mit steigendem Plättchendurchmesser, wobei sich im $Mn_XAl_YFe_{2-(X+Y)}O_3$ System das Durchmesser- zu Dickenverhältnis nicht wesentlich ändert. Nur für den Fall der Abwesenheit von Aluminium nimmt das Durchmesser- zu Dickenverhältnis mit steigender Mangan-Konzentration der Suspension ab, was dadurch erklärt werden kann, daß plättchenförmiges hydrothermal hergestelltes aluminiumfreies Eisenoxidpigment von vornherein viel dickere Plättchen als hydrothermal hergestelltes aluminiumhaltiges Eisenoxidpigment hat. Insgesamt ist das Durchmesser- zu Dickenverhältnis der manganhaltigen hydrothermal hergestellten Oxidpigmente sehr hoch. Beim $Mn_XAl_YFe_{2-(X+Y)}$-System liegt es bei Werten um 100 +- 20. Die Möglichkeit besonders dünne Plättchen herzustellen ist ein herausragender Vorteil der erfindungsgemäßen Pigmente.

Die Dauer der hydrothermalen Behandlung, d.h. die Aufheizzeit auf die jeweils vorgegebene Temperatur sowie die Verweilzeit bei dieser Temperatur einschließlich einer eventuellen Abkühlung auf Temperaturen unter 100°C beträgt im allgemeinen 30 bis 90 min. Längere Verweilzeiten sind möglich, jedoch führen sie i.a. zu einer Abnahme des Durchmesser/Dickenverhältnisses der Pigmente.

3

Die erfindungsgemäßen Mischphasenoxidpigmente kristallisieren im Gitter des Hämatits. Die Phasenbreite, d.h. die Bereiche für X und Y in der allgemeinen Formel $Mn_X Al_Y Fe_{2-(X+Y)} O_3$ ist mit maximal 0,06 und 0,2 wenig groß. Erhöhung der Mangan- bzw. Aluminiumkonzentrationen in den hydrothermal zu behandelnden Suspensionen führen zu Inhomogenitäten der erhaltenen Pigmente, d.h. zu kristallinen Verunreinigungen im Endprodukt, die die optischen Eigenschaften der plättchenförmigen Effektpigmente aufgrund ihres Streuverhaltens beeinträchtigen.

Die erfindungsgemäßen, metallisch glänzenden Pigmente haben bei kleinen Partikeldurchmessern um 10 μm eine rötlich-gelbe Farbe, die sich mit steigendem Durchmesser nach violett verschiebt. Sie finden zur Pigmentierung von Lacken, Druckfarben, Kunststoffen, Anstrichen, keramischen Oberflächen, Gläsern unnd von kosmetischen Produkten Anwendung.

Die in den folgenden Beispielen enthaltenen Prozentangaben sind, wenn nichts anderes vermerkt ist, Gewichtsprozente.

Beispiel 1

Eine gut gerührte Suspension aus 6,25 g $\alpha$-FeOOH, das durch Oxidation von $FeSO_4$ mit Luft in einem Zweistufenverfahren hergestellt worden ist und dessen BET-Oberfläche 42 m²/g beträgt, 6,98 g Al(OH)$_3$, 6,05 g NaOH und 150 g $H_2O$ wird mit 0,23 g/l $KMnO_4$ versetzt und in einem 300 ml fassenden elektrisch beheizten Rührautoklaven unter Rühren in 30 min auf 220°C (Aufheizphase) und dann in weiteren 30 min auf 305°C (Reaktionsphase) gebracht. Anschließend wird unterhalb von 10 Minuten auf Temperaturen unter 100°C abgekühlt. Das feste Reaktionsprodukt wird von der alkalischen Lösung abgetrennt, mit heißem Wasser gewaschen und im Trockenschrank bei 110°C getrocknet. Das erhaltene Pigment hat eine dunkelviolette Farbe, starken Glanz und besteht aus plättchenförmigen Kristallen mit glatten Kristallflächen wie aus rasterelektronenmikroskopischen Aufnahmen hervorgeht. Über Cilas Laserstrahlbeugungs-Granulometrie wird der mittlere Partikeldurchmesser mit 18 μ bestimmt. Die mittlere Plättchendicke wird aus Messungen der spezifischen freien Oberfläche (BET-Wert) des Pigmentes mit 0,2 μ bestimmt. Hieraus errechnet sich ein Durchmesser zu Dickenverhältnis der Plättchen von 90.

Naßchemische analytische Untersuchungen ergaben, daß das Pigment einen Mn-Gehalt von 1,2%, einen Al-Gehalt von 2,2% und einen Fe-Gehalt von 65,6% aufweist. Hieraus errechnet sich eine Pigmentzusammensetzung entsprechend der Formel $Mn_{0,034} Al_{0,128} Fe_{1,838} O_3$. Aus Röntgenaufnahmen geht hervor, daß das Produkt einphasig vorliegt und Haematitstruktur hat.

Mit einem Alkyd/Melaminharz nach DIN-Entwurf 53 238 auf einer Tellerausreibemaschine angeriebenes Pigment ergibt, nachdem die Dispersion auf einer Unterlage abgerakelt ist, einen pigmentierten Lackfilm, der einen deutlichen Metall-Effekt (Sparkle und Flop) zeigt. Ein auf einem Blech durch Spritzen hergestellter deckender Lacküberzug zeigt folgende nach dem Cielab-Farbsystem gemessenen Werte : Helligkeit L* = 37,0, Buntheit $C_{ab}$ = 14,5, Farbwinkel H° = 33,2 (Meßgerät : Hunterlab Modell D-25, Normlichtwert C, Beobachtungswinkel 2°, Meßwinkel 0°, Beleuchtungswinkel 45° unter Ausschluß des Glanzanteils).

Beispiel 2

Eine Mischung aus 6,33 g $\alpha$-FeOOH mit einer BET Oberfläche von 45 m²/g, das durch Oxidation einer wässrigen $FeSO_4$-Lösung in einem Zweistufenverfahren hergestellt worden war, 8,48 g $NaAlO_2$, 4,2 g KOH, 0,15 g $KMnO_4$ und 150 g $H_2O$ wird in einem 300 ml fassenden elektrisch beheizten Autoklaven unter Rühren in 30 min auf 310°C erhitzt. Nach einer Verweilzeit von 10 min wird wie in Beispiel 1 beschrieben, abgekühlt. Das plättchenförmige feste Reaktionsprodukt wird von der wässrigen Lösung abgetrennt, mit heißem Wasser gewaschen und bei 105° im Trockenschrank getrocknet.

Das erhaltene Pigment hat eine braungelbe Farbe, zeigt metallischen Glanz und besteht aus plättchenförmigen Kristallen. Rasterelektronenmikroskopische Aufnahmen zeigen glatte, saubere Kristallflächen der Einzelkristalle. Der mittlere Durchmesser der kristallinen Partikel beträgt 10 μ die spezifische Oberfläche (BET-Wert) 3,8 m²/g woraus sich eine mittlere Partikeldicke von 0,1 μ errechnet.

Analytische Untersuchungen ergaben eine chemische Zusammensetzung des Produktes entsprechend der Formel $Mn_{0,02} Al_{0,18} Fe_{1,80} O_3$. Aus Röntgenaufnahmen geht hervor, daß das Produkt einphasig vorliegt und die Röntgenlinien von Haematit aufweist.

Mit einem Alkyd-/Melaminharz nach DIN-Entwurf 53 238 auf einer Tellerausreibemaschine angeriebenes Pigment ergibt, nachdem die Dispersion abgerakelt und getrocknet ist, einem Film der einen Metallic Effekt, der einen besonders gut ausgeprägten Flop zeigt. Ein auf einem Blech durch Spritzen hergestellter deckender Lacküberzug zeigt folgende nach dem Cielab-Farbsystem mit dem Hunter Farbmeßgerät gemessenen Werte :
$L^* = 46,5$, $C_{ab}^*$ 27,79 und $H°$ 47,79.

Beispiel 3

Eine Mischung aus 6,67 g $\alpha$-FeOOH, das durch Oxidation einer wässrigen $FeSO_4$-Lösung mit Luft nach dem Zweistufenverfahren hergestellt worden war und eine BET-Oberfläche von 43 $m^2/g$ aufweist, wird mit 7,0 g $Al(OH)_3$, 6,0 g NaOH, 0,40 g $KMnO_4$ und 155 ml $H_2O$ innig gemischt und in einem 300 ml Rührautoklaven unter Rühren über 30 min auf 225°C und in weiteren 30 min auf 310°C erhitzt. Anschließend wird wie in Beispiel 1 beschrieben, abgekühlt. Das Reaktionsprodukt wird durch Filtrieren von der wässrigen Lösung abgetrennt, mit heißem Wasser gewaschen und bei 105° im Trockenschrank getrocknet. Das erhaltene Pigment hat eine dunkelviolette Farbe. Für das unbewaffnete Auge sind im Pulver die glitzernden Einzelkristalle erkennbar. Rasterelektronenmikroskopische Aufnahmen zeigen wohlkristallisierte Plättchen mit einem hohen Durchmesser- zu Dickenverhältnis. Cilas-Messungen ergeben einen mittleren Durchmesser der Partikel von 34,1 $\mu$. Aus dem BET-Wert von 0,95 $m^2$/gerrechnet sich eine mittlere Dicke der Partikel von 0,4 $\mu$.

Analytische Untersuchungen ergaben eine Zusammensetzung des Pigmentes, die der Formel $Mn_{0,05} Al_{0,15} Fe_{1,80}O_3$. Röntgenaufnahmen zeigen ein einphasig kristallisiertes Produkt, das die Beugungslinien des Haematits zeigt.

Pigmentierte Lackfilme, die wie in Bsp. 2 hergestellt werden, lassen einen ausgeprägten Metalleffekt mit dem optischen Eindruck von "großer Tiefe" erkennen. Auf einem Blech durch Spritzen hergestellter deckender Lacküberzug hat folgende nach dem Cielab-Farbsystem gemessene Werte : $L^* = 34,14$, $C_{ab}^* = 6,90$ und $H° = 12,81$

Beispiel 4 bis 20

Die Beispiele 4-20 werden analog Beispiel 1 durchgeführt. Hierbei wird bei allen Beispielen in 30 min von Raumtemperatur auf 220°C hochgeheizt. In den Beispielen 4-16 wird anschließend - wie in Beispiel 1 -über weitere 30 min auf 305°C aufgeheizt und dann wie in Beispiel 1 beschrieben, abgekühlt. In den Beispielen 17-20 wird nach der 30 minütigen Aufheizzeit auf 305° eine Verweildauer von 30 min bei 305° vor dem Abkühlen eingehalten. Die Ergebnisse der Versuche sind in Tabelle 1 zusammengefaßt. Sämtliche Reaktionsprodukte sind plättchenförmig wie aus REM-Aufnahmen hervorgeht und haben das Röntgenbild von Haematit.

EP 0 265 820 B1

Herstellung plättchenförmiger $Mn_X Al_Y Fe_{2-(X+Y)} O_3$-Pigmente unter Verwendung von $MnO_4^-$-Ionen.

Einwage in g

| Bei-spiel | FeOOH | Al(OH)3 | NaOH | KMnO4 | H2O | Produkt-Zusammensetzung | $\varnothing$ (μ)[1] | d(μ)[2] | $\varnothing$/d |
|---|---|---|---|---|---|---|---|---|---|
| 4 | 6,25 | 6,98 | 6.0 | 0,08 | 150 | $Mn_{0.012}Al_{0.16}Fe_{1.828}O_3$ | 8.0 | 0.08 | 100 |
| 5 | 6,25 | 6.98 | 6.0 | 0.10 | 150 | $Mn_{0.015}Al_{0.17}Fe_{1.815}O_3$ | 9.3 | 0.09 | 103 |
| 6 | 6,25 | 6.98 | 6.0 | 0.12 | 150 | $Mn_{0.018}Al_{0.18}Fe_{1.802}O_3$ | 9.3 | $0.08_5$ | 109 |
| 7 | 6,25 | 6.98 | 6.0 | 0.14 | 150 | $Mn_{0.020}Al_{0.19}Fe_{1.790}O_3$ | 9.9 | 0.103 | 96 |
| 8 | 6,25 | 6.98 | 6.0 | 0.16 | 150 | $Mn_{0.024}Al_{0.18}Fe_{1.796}O_b$ | 10.1 | 0.108 | 93 |
| 9 | 6,25 | 6.98 | 6.0 | 0.18 | 150 | $Mn_{0.028}Al_{0.17}Fe_{1.802}O_3$ | 13.2 | 0.140 | 94 |
| 10 | 6,25 | 6.98 | 6.0 | 0,22 | 150 | $Mn_{0.034}Al_{0.16}Fe_{1.806}O_3$ | 17.5 | 0.19 | 92 |
| 11 | 6,25 | 6.98 | 6.0 | 0.30 | 150 | $Mn_{0.042}Al_{0.15}Fe_{1.808}O_3$ | 25.0 | 0.26 | 96 |
| 12 | 6,25 | 6.98 | 6.0 | 0.40 | 150 | $Mn_{0.050}Al_{0.15}Fe_{1.800}O_3$ | 35.2 | 0.38 | 93 |
| 13 | 6,25 | 6.98 | 6.0 | 0.50 | 150 | $Mn_{0.057}Al_{0.14}Fe_{1.803}O_3$ | 44.0 | 0.44 | 100 |
| 14 | 6,25 | 6.98 | 6.0 | 0.56 | 150 | $Mn_{0.060}Al_{0.14}Fe_{1.800}O_3$ | 49.2 | 0.51 | 96 |
| 15 | 6,25 | 4.31 | 6.0 | 0,12 | 150 | $Mn_{0.020}Al_{0.08}Fe_{1.900}O_3$ | 12.2 | 0.30 | 41 |
| 16 | 6,25 | 0.20 | 6.0 | 0,11 | 150 | $Mn_{0.019}Al_{0.005}Fe_{1.976}O_3$ | 10.1 | 0.39 | 26 |
| 17 | 6,25 | 0 | 6.0 | 0,11 | 150 | $Mn_{0.018}Fe_{1.982}O_3$ | 10.0 | 0.39 | 26 |
| 18 | 6,25 | 0 | 6.0 | 0.20 | 150 | $Mn_{0.032}Fe_{1.968}O_3$ | 41.2 | 0.42 | 98 |
| 19 | 6,25 | 0 | 6.0 | 0.30 | 150 | $Mn_{0.041}Fe_{1.959}O_3$ | 58.0 | 0.53 | 109 |
| 20 | 6,25 | 0 | 6.0 | 0.40 | 150 | $Mn_{0.053}Fe_{1.947}O_3$ | 62.6 | 0.55 | 114 |
| Vergl.-ver-such | 6,25 | 6.98 | 6.0 | 0 | | $Al_{0.18}Fe_{1.82}O_3$ | 8.0 | $0.08_6$ | 93 |

1 Plättchendurchmesser über Laserstrahlbeugungsmessungen mit einem CILAS-Granulometer

2 Plättchendicke aus BET-Oberfläche errechnet.

## Ansprüche

1. Plättchenförmige Pigmente auf Basis von Eisenoxid der allgemeinen Formel $Mn_XAl_YFe_{2-(X+Y)}O_3$ in der X einen Wert von 0,01-0,06 und Y einen Wert von 0-0,2 hat.

2. Verfahren zur Herstellung der plättchenförmigen Pigmente nach Anspruch 1, dadurch gekennzeichnet, daß man eine Eisen(III)hydroxid bzw. -oxidhydrat enthaltende wäßrige Suspension in Gegenwart von
   a) Alkalihydroxid und/oder -carbonat,
   b) im Reaktionsmedium löslichen Manganverbindungen und
   c) gegebenenfalls von Alkalialuminaten
bei Temperaturen oberhalb von 170°C einer hydrothermalen Behandlung unterzieht, anschließend das erhaltene Pigment von der Reaktionslösung abtrennt, wäscht und trocknet.

3. Verfahren nach Anspruch 2, dadurch gekennzeichnet, daß man als im Reaktionsmedium lösliche Hanganverbindungen Alkalipermanganate einsetzt.

4. Verfahren nach den Ansprüchen 2 bis 3, dadurch gekennzeichnet, daß der Gehalt der Suspensionen am Alkalihydroxid und/oder -carbonat 2N nicht überschreitet.

5. Verfahren nach den Ansprüchen 2 bis 4, dadurch gekennzeichnet, daß man bei der hydrothermalen Behandlung Temperaturen von 250 bis 360°C einhält.

6. Verwendung der Pigmente nach den Ansprüchen 1 bis 5 für die Pigmentierung von Anstrichen, Lacken, Kunststoffen, Druckfarben, Keramischen Oberflächen, Gläsern und von Kosmetischen Produkten.

## Claims

1. A lamellar pigment based on iron oxide of the general formula $Mn_XAl_YFe_{2-(X+Y)}O_3$ where X is 0.01-0.06 and Y is 0-0.2.

2. A process for the preparation of a lamellar pigment as claimed in claim 1, wherein an aqueous suspension containing iron(III) hydroxide or hydrated iron(III) oxide is subjected to a hydrothermal treatment at above 170°C in the presence of
   a) an alkali metal hydroxide and/or carbonate,
   b) a manganese compound soluble in the reaction medium and
   c) in the presence or absence of an alkali metal aluminate,
and the resulting pigment is then separated from the reaction solution, washed and dried.

3. A process as claimed in claim 2, wherein an alkali metal permanganate is used as the manganese compound which is soluble in the reaction medium.

4. A process as claimed in claim 2 or 3, wherein the content of alkali metal hydroxide and/or carbonate in the suspension does not exceed 2 N.

5. A process as claimed in claim 2 or 3 or 4, wherein a temperature of from 250 to 360°C is maintained in the hydrothermal treatment.

6. Use of a pigment as claimed in any of claims 1 to 5 for pigmenting coatings, finishes, plastics, printing inks, ceramic surfaces, glasses and cosmetic products.

## Revendications

1. Pigments en forme de plaquettes à base d'oxyde de fer de formule générale $Mn_XAl_YFe_{2-(X+Y)}O_3$ où X vaut de 0,01 à 0,06 et Y de 0 à 0,2.

2. Procédé de préparation des pigments en forme de plaquettes selon la revendication 1, caractérisé en ce qu'on soumet à un traitement hydrothermal à une température supérieure à 170°C une suspension aqueuse contenant de l'hydroxyde ou de l'oxyhydrate de fer(III) en présence
   a) d'un hydroxyde et/ou d'un carbonate de métal alcalin
   b) d'un composé du manganèse soluble dans le milieu réactionnel et
   c) éventuellement d'aluminates alcalins,
ensuite on sépare de la solution de réaction le pigment obtenu, on le lave et on le sèche.

3. Procédé selon la revendication 2, caractérisé en ce qu'on utilise comme composé du manganèse soluble dans le milieu réactionnel un permanganate alcalin.

4. Procédé selon les revendications 2 ou 3, caractérisé en ce que la teneur de la suspension en hydroxyde et/ou carbonate alcalin ne dépasse pas 2N.

5. Procédé selon les revendications 2 à 4, caractérisé en ce qu'on respecte pour le traitement hydrothermal des températures de 250 à 360°C.

6. Utilisation des pigments selon les revendications 1 à 5 pour la pigmentation d'enduits, de vernis, de matières plastiques, d'encres d'imprimerie, de revêtements céramiques, de verres et de produits cosmétiques.